(19)

Europäisches Patentamt
European Patent Office
Office européen des brevets

(11) **EP 2 003 882 A2**

(12) **EUROPEAN PATENT APPLICATION**

(43) Date of publication:
**17.12.2008 Bulletin 2008/51**

(51) Int Cl.:
**H04N 5/232** (2006.01)

(21) Application number: **08251997.6**

(22) Date of filing: **09.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.06.2007 JP 2007155895**

(71) Applicant: **Sony Corporation**
**Tokyo (JP)**

(72) Inventor: **Imata, Masanori,**
**Sony Corporation**
**Minato-ku, Tokyo (JP)**

(74) Representative: **Scaddan, Gareth Casey et al**
**D Young & Co**
**120 Holborn**
**London EC1N 2DY (GB)**

(54) **Image pickup**

(57)     Disclosed herein is an image pickup apparatus, including: image inputting portion configured to capture an image; optical portion configured to adjust a capture magnification; a rotatable table for adjusting a capture angle; storage portion configured to store a displacement amount between the center of a reading region of the image inputting portion and an optical axis of the optical portion; and control portion configured to calculate correction values and carry out angular control of the rotatable table so as to cancel the displacement amount based on the correction amounts.

FIG.1

EP 2 003 882 A2

**Description**

**Field of the Invention**

This invention relates to image pickup. Embodiments of the present invention relate to an image pickup apparatus and an image pickup method wherein the capture magnification is adjusted by optical means and the capture angle is adjusted by a rotatable table to capture an image of an image pickup object.

**Background of the Invention**

A network camera which can fetch a remote image through a network and display the fetched image on a monitor has a function called area zoom function of displaying, if a user designates an arbitrary portion of the camera image to be surrounded by a rectangle on the monitor, the surrounded portion in a zoomed up state. An exemplary one of network-cameras of the type described is disclosed, for example, in Japanese Patent Laid-Open No. 2004-271802.

**Summary of the Invention**

Various respective aspects and features of the invention are defined in the appended claims. Combinations of features from the dependent claims may be combined with features of the independent claims as appropriate and not merely as explicitly set out in the claims.

Usually an image pickup object imaged at the center of the screen of the monitor at the tele end is displaced from the center of the display screen at the wide end because of an error in attachment of a zoom lens serving as optical means and an image pickup device serving as image inputting means or by some other reason. On the contrary, an image pickup object imaged at the center of the screen at the wide end is displaced from the center of the display screen at the tele end. Therefore, a camera having a comparatively great attachment error suffers from a problem that an image pickup object as a target is displaced from the center of the display screen.

Therefore, it is desirable to provide an image pickup apparatus and an image pickup method by which such a problem as just described is solved.

According to an embodiment of the present invention, there is provided an image pickup apparatus including: image inputting means; optical means; a rotatable table; storage means; and control means. The image inputting means captures an image. The optical means adjusts a capture magnification angle when an image is to be captured by the image inputting means. The rotatable table adjusts a capture angle when an image is to be captured by the image inputting means. The storage means stores a displacement amount between the center of a reading region of the image inputting means and an optical axis of the optical means. The control means calculates, when the capture magnification is to be adjusted to a predetermined capture magnification by the optical means and the capture angle is to be adjusted to a predetermined capture angle by the rotatable table to capture an image by the image inputting means, correction values for the capture magnification and the capture angle with reference to the predetermined capture magnification and the predetermined capture angle using the displacement amount stored in the storage means. The control means further carries out angular control of the rotatable table so as to cancel the displacement amount based on the correction amounts.

In the image pickup apparatus, a displacement amount between the center of the reading region of the image inputting means and the optical axis of the optical means, that is, a mechanical positional displacement amount, is stored in the storage means. Then, the stored displacement amount is used to calculate correction amounts with reference to the predetermined capture magnification and the predetermined capture angle, and angular control of the rotatable table is carried out based on the correction amounts. Therefore, at whatever magnification and angle an image is captured, an image of an image pickup object as a target can be captured to the center position.

The storage means may store, as the displacement amount, vertical and horizontal displacement amounts when an image of an image pickup object which is the center of display on a monitor when the image is captured at the tele end by the optical means is displayed in a state displaced from the center of display on the monitor when an image of the image pickup object is captured at the wide end by the optical means.

The image pickup apparatus may be configured such that the rotatable table can adjust rotational angles of the image inputting means in a horizontal direction and a vertical direction, and the control means calculates correction amounts for the rotational base in the horizontal direction and the vertical direction to carry out the angular control of the rotatable table.

According to another embodiment of the present invention, there is provided an image pickup method including the steps of: adjusting and calculating. The adjusting step adjusts, when an image is to be captured by image inputting means, a capture magnification by optical means and adjusting a capture angle by a rotatable table. The calculating step calculates correction amounts for the capture magnification and the capture angle with reference to a predetermined capture magnification and a predetermined capture angle using a displacement amount between the center of a reading region of the image inputting means and the center of the optical means stored in advance and carries out angular control of the rotatable table so as to cancel the displacement amount based on the correction amounts.

In the image pickup method, a displacement amount between the center of the reading region of the image inputting means and the optical axis of the optical means, that is, a mechanical positional displacement amount, is stored in advance. Then, the stored displacement amount is used to calculate correction amounts with reference to the predetermined capture magnification and the predetermined capture angle, and angular control of the rotatable table is carried out based on the correction amounts. Therefore, at whatever magnification and angle an image is captured, an image of an image pickup object as a target can be captured to the center position.

Accordingly, with the image pickup apparatus and the image pickup method, even if magnification adjustment by the optical means and/or capture angle adjustment by the rotatable table are carried out, the targeted image pickup object can normally be displayed at the center of the display.

**Brief Description of the Drawings**

Embodiments of the invention will now be described with reference to the accompanying drawings, throughout which like parts are referred to by like references, and in which:

FIG. 1 is a schematic view showing a configuration of an image pickup apparatus to which an embodiment of the present invention is applied;
FIG. 2 is a block diagram showing a control block formed from a CPU in the image pickup apparatus of FIG. 1;
FIGS. 3A and 3B are schematic views illustrating displacement of the optical axis center;
FIG. 4 is a schematic view illustrating a measurement method for displacement in an image pickup method to which the embodiment of the present invention is applied; and
FIG. 5 is a schematic view illustrating an area zooming function used in the image pickup method.

**Description of the Example Embodiment**

Now, an embodiment of the present invention will be described below, based on the drawings.

<Configuration of the Image Pickup Apparatus>

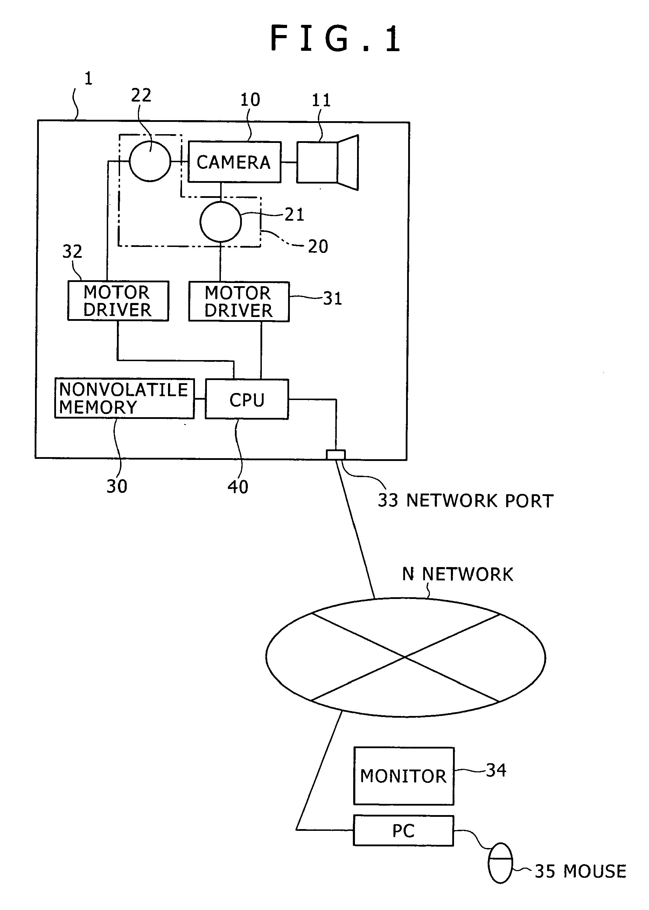

Referring first to FIG. 1, there is shown a configuration of an image pickup apparatus to which an embodiment of the present invention is applied. The image pickup apparatus shown is formed as a network camera which can be remotely controlled principally through a network. The image pickup apparatus 1 includes a camera 10 serving as image inputting means for capturing an image, and a zoom lens 11 serving as optical means for adjusting the capture magnification when an image is captured by the camera 10. The image pickup apparatus 1 further includes a pan head 20 serving as a rotatable table for adjusting the capture angle when an image is captured by the camera 10. The image pickup apparatus 1 further includes a nonvolatile memory 30 serves as storage means for storing parameters for various calculations and a CPU (Central Processing Unit) 40 serving as control means for controlling a network N and the camera 10.

The camera 10 is a device for capturing an image by means of an image sensor such as a CCD (Charge Coupled Device) image sensor or a CMOS (Complementary Metal Oxide Semiconductor) image sensor and converting the image into an electric signal. Capture control of an image of the camera 10 is carried out in accordance with an instruction from the CPU 40.

The zoom lens 11 is optical means attached to the camera 10 and adjusts the capture magnification in accordance with an instruction from the CPU 40. The zoom lens 11 has a magnification which can be adjusted continuously from the wide angle end or wide end to the telescope end or tele end.

The pan head 20 is a rotatable table for adjusting the capture direction of an image by the camera 10 and includes a pan motor 21 for adjusting the angle of the camera 10 in a horizontal direction and a tilt motor 22 for adjusting the angle of the camera 10 in a vertical position. The pan motor 21 and the tilt motor 22 are controlled by motor drivers 31 and 32, respectively, and can set desired capture angles in accordance with instructions from the CPU 40.

The nonvolatile memory 30 stores various parameters to be used in calculation for various controls by the CPU 40. In the present embodiment, the nonvolatile memory 30 stores displacement amounts between the center of a reading area of the camera 10 and the optical axis of the zoom lens 11, and the displacement amounts are used for cancellation of the displacement amount by the CPU 40.

The CPU 40 is a mathematical operation section for controlling the network N, for controlling the motor drivers 31 and 32 for the pan motor 21 and the tilt motor 22 and for carrying out various processes such as compression of image data of an image captured by the camera 10.

In the present embodiment, when an image is to be captured by the camera 10, the magnification is adjusted to a predetermined capture magnification by the zoom lens 11. Then, when the pan head 20 is used to adjust the capture angle of the camera 10 to a predetermined capture angle, the CPU 40 uses the displacement amounts stored in the nonvolatile memory 30 to calculate correction amounts corresponding to the predetermined capture magnification and the predetermined capture angles. Then, the CPU 40 carries out angular control of the pan head 20 based on the correction amounts so that the displacement amounts may be canceled.

Where the image pickup apparatus 1 is used as a network camera, the network N such as a LAN (Local Area Network) is connected to a network port 33 of the image pickup apparatus 1 and also to a personal computer PC. If predetermined browser software is started in the personal computer PC, then an image captured by the camera 10 is converted by the CPU 40 into data of a data format which can be displayed by the browser software. Then, the image data is sent to the personal computer PC through the network N. Thus, the personal computer PC acquires the image data of the data format through the network N and interprets the image data by the browse software to display the image.

Further, the browser software provides a control region for accepting a command for controlling the camera 10 such as, for example, a software button such as an arrow mark displayed by the browse software. Thus, if the user operates the control region using an inputting device such as a mouse, then an image can be captured at a desired camera angle or a desired magnification. It is to be noted that, as such an inputting device, not only a mouse but also other devices such as a touch panel, a pen tablet or the like provided on a monitor can be applied.

For example, if the user operates the mouse 35 or the like to select a software button in the control region of the browse software to issue an instruction to make a leftward or rightward panning operation, then the instruction is sent to the CPU 40 of the image pickup apparatus 1 through the network N. The CPU 40 interprets the instruction and issues an instruction to the motor driver 31 for the pan motor 21. Consequently, the pan motor 21 rotates by a predetermined amount to carry out a panning operation of the camera 10.

Similarly, if the user operates the mouse 35 or the like to issue an instruction to make an upward or downward tilting operation, then the instruction is sent to the CPU 40 of the image pickup apparatus 1 through the network N. The CPU 40 interprets the instruction and issues an instruction to the motor driver 32 for the tilt motor 22. Consequently, the tilt motor 22 rotates by a predetermined amount to carry out a tilting operation of the camera 10.

Also a zooming operation of the zoom lens 11 can be carried out similarly. In particular, if the user operates the mouse 35 or the like to select a software button in the control region of the browse software to issue an instruction to make a zooming operation, then the instruction is sent to the CPU 40 of the image pickup apparatus 1 through the network N. The CPU 40 interprets the instruction and issues an instruction to a zoom motor not shown for the zoom lens 11. Consequently, the zoom lens 11 can be adjusted to a desired magnification.

Further, in the present embodiment, the image pickup apparatus 1 has an area zoom function of carrying out, if a predetermined area of a rectangular shape in an image displayed in the display region by the browse software is designated using the mouse or the like, zooming and angular adjustment for causing the designated area to be set to an overall area of the display region.

In particular, if the user designates a desired area in the display region using the mouse 35 of the like, then the angles of the camera 10 and the magnification of the zoom lens 11 are calculated based on the center and the size of the area. Then, the CPU 40 controls so that the designated area is expanded to the overall area of the display region. Thus, if the user only designates an area centered at a target, then a zoomed image centered at the target can be obtained immediately.

<Control Blocks by the CPU>

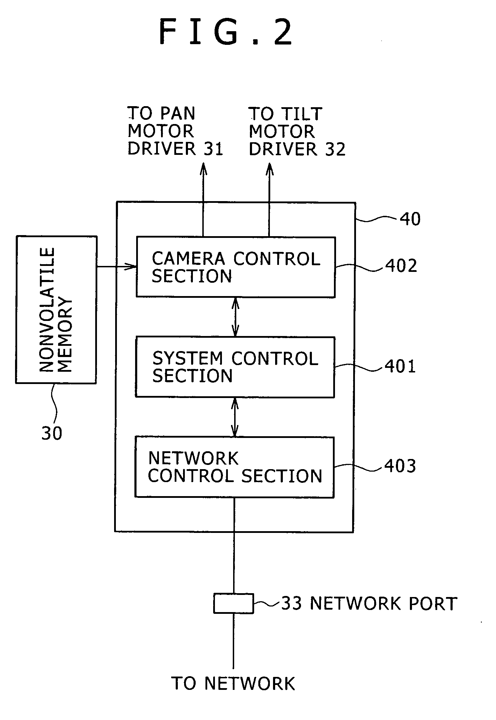

FIG. 2 shows control blocks formed from the CPU. Referring to FIG. 2, the control blocks formed in the CPU 40 include a system control section 401, a camera control section 402 and a network control section 403.

The system control section 401 controls the entire system of the image pickup apparatus. The camera control section 402 calculates control values to be provided to the motor drivers 31 and 32 for adjusting the capture angles of an image by the camera 10. The network control section 403 carries out communication control such as negotiation for establishing connection to the network N.

In the present embodiment, the image pickup apparatus 1 is characterized particularly in calculation carried out by the camera control section 402. In particular, the camera control section 402 calculates correction amounts for canceling displacement amounts of the capture center position which appear when panning, tilting and zooming are carried out and arise from the displacement between the center of the reading region of the camera 10 and the optical axis of the zoom lens 11. Then, the camera control section 402 suppresses the displacement of the optical axis based on the control values provided to the pan motor 21 and the tilt motor 22 with the correction amounts taken into account.

<Image Pickup Method>

An image pickup method to which the embodiment of the present invention is applied involves angular adjustment of the camera 10 including calculation carried out by the camera control section 402. The image pickup method is generally carried out in the following manner. In particular, before an image is captured by the camera 10, the capture magnification and so forth are adjusted by the zoom lens 11, and the capture angles are adjusted by the pan head 20. Then, upon such adjustment, the displacement values between the center of the reading region of the camera 10 and the optical axis of the zoom lens 11 stored in the nonvolatile memory 30 in advance are used to calculate correction values corresponding to a predetermined capture magnification and predetermined capture angles. Then, the angular adjustment of the pan head 20 is carried out so as to cancel the displacements based on the correction amounts.

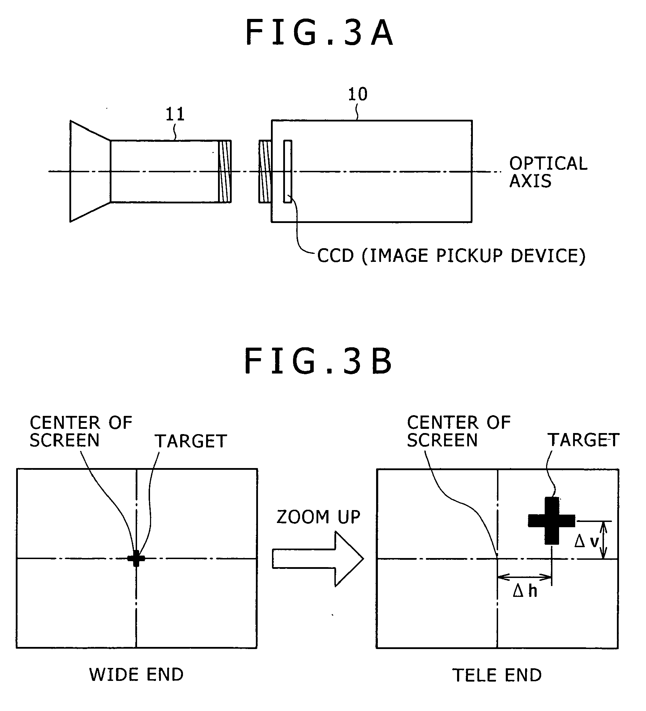

Before the calculation of the correction amounts is carried out, in the present embodiment, the displacement amounts between the center of the capture region of the camera 10 and the optical axis of the zoom lens 11 are measured and stored into the nonvolatile memory 30. FIGS. 3A and 3B illustrate displacement between the center of the reading region of the camera 10 and the optical axis of the zoom lens 11. As seen in FIG. 3A, an image pickup device such as a CCD unit is incorporated in the camera 10. The image pickup device such as a CCD unit is positioned such that the center thereof coincides with the optical axis set in the camera housing. However, upon installation, an error occurs.

Meanwhile, also the zoom lens 11 is positioned such that the center thereof coincides with the optical axis set to the camera 10. Accordingly, ideally the center of the reading region of the camera 10 and the optical axis of the zoom lens 11 coincide with each other. However, since actually an installation error upon assembly occurs, the installation error or displacement in this instance causes displacement of the display position.

For example, if zooming up of raising the magnification of the zoom lens 11 is carried out in a state wherein the zoom lens 11 is set to the wide angle end and the angles of the camera 10 are adjusted such that a predetermined object is positioned at the center of the screen, then a phenomenon that, at the tele end, the display position of the object, which was imaged at the center of the screen when the zoom lens 11 was set to the wide end, is displaced from the center of the screen appears. This displacement arises from the displacement between the center of the reading region of the camera 10 and the optical axis of the zoom lens 11.

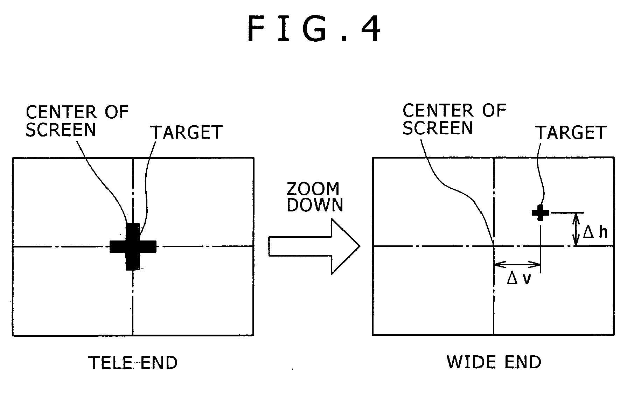

In the present embodiment, the displacement between the center of the reading region of the camera 10 and the optical axis of the zoom lens 11 is measured in advance, and the measured displacement is used to calculate the correction amount. FIG. 4 illustrates a measurement method of the displacement. First, the zoom lens 11 is set to the tele end, and the angles of the camera 10 are adjusted such that a predetermined object is imaged at the center of the screen as seen in FIG. 4. Then, the zoom lens is set to the wide end as seen in FIG. 4. Thereupon, if the object adjusted to the center of the screen formerly is displayed at a position displaced from the center of the screen, then the displacement amount Δh in the horizontal direction and the displacement amount Δv in the vertical direction from the center of the screen are measured. Then, the measurement displacement amounts are stored into the memory.

<Calculation Method of the Correction Values>

The camera control section 402 uses the displacement amounts between the center of the reading region of the camera 10 and the optical axis of the zoom lens 11 measured in advance to calculate the correction values. First, calculation of a horizontal error Δx to be actually applied and a vertical error Δy to be actually applied when the predetermined capture magnification and the predetermined angles of the pan head 20 are set is carried out in accordance with the following expressions:

$$\Delta x = \Delta h(n1 - n0)/(Nt - Nw)$$

$$\Delta y = \Delta v(n1 - n0)/(Nt - N2) \qquad \dots \ (1)$$

where n0 is the lens magnification at present, N1 a desired set lens magnification, Nt the lens magnification at the tele end, and Nw the lens magnification at the wide end.

Since the displacement amounts Δh and Δv fetched in advance are displacement amounts between the wide end and the tele end, the calculation described above converts the measured errors into displacement amounts when the lens magnification is changed actually, that is, a horizontal error and a vertical error applied actually. The camera control section 402 uses the values of the horizontal error and the vertical error determined by the calculation described above to be applied actually to carry out correction for the operation angles of the pan motor 21 and the tilt motor 22 of the pan head 20. By the correction, any positional displacement arising from the displacement between the center of the reading region of the camera 10 and the optical axis of the zoom lens 11 can be canceled.

<Particular Example of the Angle Correction of the Pan Head>

In the present embodiment, angle correction by an area zoom function is carried out in the following manner. In the angle correction, when an instruction to capture an image captured already at a predetermined magnification and a predetermined angle at another magnification and another angle is issued, the magnification and the angles of the camera are controlled so that the area in the form of a rectangular region in the entire display region designated by the user are controlled.

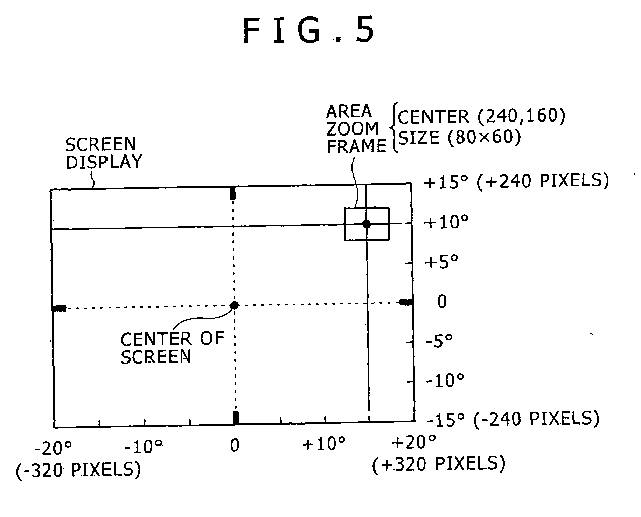

FIG. 5 illustrates the area zoom function. In the area zoom function illustrated in FIG. 5, the screen size is 640 pixels in the horizontal direction and 480 pixels in the vertical direction as an example. Further, it is assumed that the angle of view of the camera 10 corresponding to the screen size mentioned above is $\pm 20°$ in the horizontal direction and $\pm 15°$ in the vertical direction.

In the area zooming operation, a predetermined lens magnification and panning and tilting angles of the pan head are calculated based on an area zoom frame designated by the user, and the lens and the pan head are controlled based on the calculated values so that the area zoom frame may become the entire display region.

For the area zoom frame, a rectangular region designated by an operation of the mouse or the like by the user is used. It is to be noted that, where the designated area zoom frame has an aspect ratio different from that of the screen, adjustment of the area zoom frame is carried out so that the aspect ratio of the screen may coincide with the area zoom frame with reference to one of the vertical and horizontal sizes of the area zoom frame. This adjustment may be carried out only in the- inside or may be reflected directly on the area zoom frame to be displayed on the screen.

It is assumed that, in the example illustrated in FIG. 5, a center position (240, 160) and a size of 80 pixels in the horizontal direction and 60 pixels in the vertical direction are designated as the area zoom frame. Since the angle of view is 40° ($\pm 20°$) in the horizontal direction and 30° ($\pm 15°$) in the vertical direction, in order to allow the image in the area zoom frame to be displayed in the enlarged scale, the camera should be rotated by 15° rightwardly and by 10° upwardly. Further, the lens magnification should be set to eight-time zooming.

The panning and tilting angles and the zoom magnification are determined by the following calculations:

$\theta p$ = (horizontal angle of view of screen area/horizontal size of screen area) x horizontal center position of area zoom frame

$\theta t$ = (vertical angle of view of screen area/vertical size of screen area) x vertical center position of area zoom frame

$n1$ = (horizontal size of screen area/horizontal size of area zoom frame) x lens magnification at present where $\theta p$ is the panning angle, $\theta t$ the tilting angle, and $n1$ the zoom magnification.

While, in the area zoom function, panning and tilting angles and a zoom magnification are determined by the calculation given above, since some displacement between the center of the reading region of the camera and the optical axis of the zoom lens described hereinabove actually exists, an image of the target is not necessarily imaged at the center of the designated area zoom frame.

Therefore, calculation in accordance with the following expressions is carried out to correct the panning and tilting angles. By the correction, area zooming wherein the displacement between the center of the reading region of the camera and the optical axis of the zoom lens is canceled can be carried out.

$\theta p$ = (horizontal angle of view of screen area/horizontal size of screen area) x (horizontal center position of area zoom frame - horizontal error $\Delta x$ to be applied actually)

$\theta t$ = (vertical angle of view of screen area/vertical size of screen area) x (vertical center position of area zoom frame - vertical error $\Delta y$ to be applied actually)

The horizontal error $\Delta x$ to be applied actually and- the vertical error $\Delta y$ to be applied actually are determined in accordance with the expressions (1) given hereinabove.

In the calculation to be carried out in accordance with the expressions given above, the camera control section 402 calculates the horizontal error $\Delta x$ and the vertical error $\Delta y$ both to be applied actually based on the displacement amounts $\Delta h$ and $\Delta v$ stored in advance in the nonvolatile memory 30 and the size and the center position of the area zoom frame. The camera control section 402 further calculates the rotational angle $\theta p$ of the pan motor 21 and the rotational angle $\theta t$ of the tilt motor 22. Then, the camera control section 402 sends the values obtained by the calculation to the respective motor drives 31 and 32.

Consequently, when desired area zooming is to be carried out, accurate area zooming wherein the displacement between the center of the reading region of the camera 10 and the optical axis of the zoom lens 11 is canceled can be carried out.

It is to be noted that the numerical values of the pixel size, angle and so forth used in the foregoing description are a mere example and the present invention is not limited to the specific values. Further, while, in the embodiment described above, the panning and tiling coordinate axes used for description of the regions extend perpendicularly to each other on the screen for simplified description of the area zooming-, if the tilting angle becomes a large angle, then the panning and tiling coordinate axes come to indicate curved lines on the screen. Where such a region as just described is applied, the panning and tilting angles cannot be calculated simply by proportional calculation from the angle of view and pixel number. However, even in such a case as just described, if the center position of the area zoom frame is corrected with the horizontal error $\Delta x$ and the vertical error $\Delta y$ to be applied actually as a preprocess, then the accuracy of the center position can be improved. Further, while, in the embodiment described above particularly, an image pickup apparatus is formed from a network camera, the present invention can be applied also to a configuration wherein an image pickup apparatus and a monitor are connected directly to each other without the intervention of a network.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An image pickup apparatus, comprising:

   image inputting means for capturing an image;
   optical means for adjusting a capture magnification when an image is to be captured by said image inputting means;
   a rotatable table for adjusting a capture angle when an image is to be captured by said image inputting means;
   storage means for storing a displacement amount between the center of a reading region of said image inputting means and an optical axis of said optical means; and
   control means for calculating, when the capture magnification is to be adjusted to a predetermined capture magnification by said optical means and the capture angle is to be adjusted to a predetermined capture angle by said rotatable table to capture an image by said image inputting means, correction values for the capture magnification and the capture angle with reference to the predetermined capture magnification and the predetermined capture angle using the displacement amount stored in said storage means and carrying out angular control of said rotatable table so as to cancel the displacement amount based on the correction amounts.

2. The image pickup apparatus according to claim 1, wherein said storage means stores, as the displacement amount, vertical and horizontal displacement amounts when an image of an image pickup object which is the center of display on a monitor when the image is captured at the tele end by said optical means is displayed in a state displaced from the center of display on the monitor when an image of the image pickup object is captured at the wide end by said optical means.

3. The image pickup apparatus according to claim 1, wherein said rotatable table can adjust rotational angles of said image inputting means in a horizontal direction and a vertical direction, and said control means calculates correction amounts for said rotational base in the horizontal direction and the vertical direction to carry out the angular control of said rotatable table.

4. An image pickup method, comprising the steps of:

   adjusting, when an image is to be captured by image inputting means, a capture magnification by optical means and adjusting a capture angle by a rotatable table; and
   calculating correction amounts for the capture magnification and the capture angle with reference to a predetermined capture magnification and a predetermined capture angle using a displacement amount between the center of a reading region of the image inputting means and the center of the optical means stored in advance and carrying out angular control of the rotatable table so as to cancel the displacement amount based on the correction amounts.

# F I G . 1

# F I G . 2

TO PAN
MOTOR
DRIVER 31

TO TILT
MOTOR
DRIVER 32

NONVOLATILE
MEMORY

CAMERA CONTROL
SECTION — 402

SYSTEM CONTROL
SECTION — 401

NETWORK
CONTROL SECTION — 403

40

30

33 NETWORK PORT

TO NETWORK

# FIG.3A

10

11

OPTICAL
AXIS

CCD (IMAGE PICKUP DEVICE)

# FIG.3B

CENTER OF
SCREEN    TARGET

CENTER OF
SCREEN    TARGET

ZOOM UP

$\Delta v$

$\Delta h$

WIDE END

TELE END

# F I G . 4

CENTER OF
SCREEN   TARGET

ZOOM
DOWN

CENTER OF
SCREEN   TARGET

Δh

Δv

TELE-END                    WIDE END

# F I G . 5

AREA
ZOOM { CENTER (240,160)
FRAME { SIZE (80×60)

SCREEN
DISPLAY

+15° (+240 PIXELS)

+10°

+5°

0

CENTER OF
SCREEN

-5°

-10°

-15° (-240 PIXELS)

-20°         -10°          0          +10°        +20°
(-320 PIXELS)                                (+320 PIXELS)

**EP 2 003 882 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004271802 A